# EUROPÄISCHE PATENTSCHRIFT

(11) **EP 3 085 221 B1**
(45) Veröffentlichungstag und Bekanntmachung des Hinweises auf die Patenterteilung: **18.12.2019**
(21) Anmeldenummer: 16152507.6
(22) Anmeldetag: 25.01.2016
(51) Int. Cl.: A01D 41/127, G05B 13/02, G05B 17/02

(54) **ERNTESYSTEM MIT EINER SELBSTFAHRENDEN ERNTEMASCHINE**
HARVESTING SYSTEM WITH A SELF-PROPELLED HARVESTING MACHINE
SYSTÈME DE RÉCOLTE COMPRENANT UNE MOISSONNEUSE AUTOMOBILE

(30) Priorität: 24.04.2015 DE 102015106302
(43) Veröffentlichungstag der Anmeldung: 26.10.2016
(73) Patentinhaber: CLAAS Selbstfahrende Erntemaschinen GmbH, 33428 Harsewinkel (DE)
(72) Erfinder: Wilken, Andreas, 49143 Bissendorf (DE); Heitmann, Christoph, 48231 Warendorf (DE); Bormann, Bastian, 23749 Grube (DE); Baumgarten, Dr., Joachim, 48361 Beelen (DE); Neu, Sebastian, 49196 Bad Laer (DE); Kettelhoit, Boris, 33335 Gütersloh (DE); Krause, Thilo, 39249 Glinde (DE); Bussmann, Christoph, 33428 Harsewinkel (DE); Vöcking, Henner, 33397 Rietberg (DE); Herter, Felix, 33428 Harsewinkel (DE)
(74) Vertreter: CLAAS Gruppe

(56) Entgegenhaltungen:
- EP-A1- 1 543 712
- EP-A1- 1 902 609
- EP-A1- 2 728 523
- EP-A2- 2 687 924
- EP-A2- 2 837 279

## Beschreibung

Die Erfindung betrifft ein Erntesystem mit einer selbstfahrenden Erntemaschine, insbesondere einem Mähdrescher, mit den Merkmalen des Oberbegriffs von Anspruch 1.

Selbstfahrenden Erntemaschinen wie Mähdreschern, Feldhäckslern o. dgl. sind eine Vielzahl von Maschinenparametern zugeordnet, die während des Ernteprozesses einzustellen sind. Mit der Einstellung dieser Maschinenparameter lässt sich eine zumindest teilweise autonome Einstellung und Optimierung der relevanten Ernteprozessparameter erzielen.

Eine als Mähdrescher ausgestaltete selbstfahrende Erntemaschine dient der Mahd und dem Drusch von Körnerfrüchten. Der Erntemaschine sind eine Reihe von Arbeitsorganen wie Schneidwerk, Dreschwerk, Abscheideanordnung, Reinigungsanordnung und Verteilanordnung zugeordnet. Der Drusch erfolgt durch ein Dreschwerk, welches aus dem von dem Mähdrescher durch das Schneidwerk aufgenommenen Erntegut Korngut gewinnt, das nach dem Dreschen einer Abscheidung und einer anschließenden Reinigung einem Getreidetank zugeführt wird. Als weitere Bestandteile des Ernteguts bleiben weiter z.B. die Spreu und das Stroh übrig, welche entweder über das Feld verteilt oder - im Falle des Strohs - auf Schwad z.B. zur späteren Aufnahme durch eine Ballenpresse gelegt werden können. Hier und nachfolgend ist unter dem Begriff "Erntegut" der gesamte vom Dreschwerk aufgenommene Gutstrom zu verstehen, also einschließlich derjenigen Körner, welche noch nicht als Korngut aus dem Erntegut gewonnen wurden, und den Körnern, welche ggf. in dem Erntegutstrom als Verlust verbleiben und mit dem Stroh abgelegt werden.

Im Dreschwerk wird das Korn durch eine im Prinzip wälzende Bearbeitung aus dem Stroh gerieben - ausgedroschen - und vom übrigen Erntegutstrom getrennt, sodass es direkt der Reinigung zugeführt werden kann. Der übriggebliebene Erntegutstrom wird dann dem Abscheidebereich zugeführt, in welchem z.B. durch eine Schüttleranordnung das verbliebene Korn von dem Erntegutstrom getrennt und danach ebenfalls der Reinigung zugeführt wird.

Aus der DE 10 2009 009 767 A1, von welcher die vorliegende Erfindung ausgeht, ist darüber hinaus ein Erntesystem mit einem Mähdrescher mit einem Fahrerassistenzsystem bekannt, welches Fahrerassistenzsystem verschiedene Ernteprozessparameter an dem Mähdrescher misst und sie daraufhin überprüft, ob sie in einen kritischen Wertebereich gelangen bzw. kritische Grenzwerte über- oder unterschreiten. Falls diese Situation eintritt, kommuniziert das Fahrerassistenzsystem interaktiv mit dem Fahrer, indem dem Fahrer Maßnahmen zur Optimierung der Ansteuerung des Dreschwerks vorgeschlagen werden, die aus dem kritischen Wertebereich hinausführen sollen. Dem Fahrerassistenzsystem ist hier ein Ernteprozesssensorsystem aus einer Mehrzahl von Ernteprozesssensoren zugeordnet, mit denen sich verschiedene aus dem Ernteprozess resultierende Ernteprozessparameter ermitteln lassen. Die Ernteprozessparameter geben Aufschluss über den laufenden Ernteprozess und liegen der obigen Optimierung zu Grunde.

Nachteilig bei der obigen Erntemaschine mit einem verschiedene Ernteprozessparameter ermittelnden Ernteprozesssensorsystem ist die Tatsache, dass die Einstellung eines Soll-Ernteprozesszustands stets mit einem gewissen Einschwingvorgang verbunden ist, bis der Ziel-Ernteprozesszustand erreicht ist. Dies liegt in erster Linie daran, dass die der Optimierung zu Grunde liegenden Ernteprozessparameter selbst abhängig vom Ernteprozess sind.
Es sind auch Erntemaschinen bekannt, die bei der Einstellung von Maschinenparametern auf Umfeldsensorsignale zurückgreifen. Ein Beispiel hierfür ist die vorausschauende, sensorbasierte Ermittlung von Eigenschaften des Feldbestands mittels Umfeldsensoren, die sich an der Erntemaschine befinden können (DE 10 2011 085 380 A1). Ein weiteres Beispiel ist die vorausschauende, sensorbasierte Ermittlung von Eigenschaften des Feldbestands mittels Umfeldsensoren, die sich an einem Fluggerät befinden (DE 10 2010 038 661 A1). Aus der EP 2 687 924 A2 ist eine selbstfahrende landwirtschaftliche Maschine bekannt, deren Arbeitsparameter mit einer Steuer- und Regeleinrichtung automatisiert einstellbar sind.

Nachteilig bei den bekannten Erntesystemen mit Umfeldsensoren ist die wenig systematische Einbeziehung der resultierenden Sensorsigale in die Ansteuerung der Arbeitsorgane. Eine systematische Verbesserung des oben angesprochenen Einschwingverhaltens lässt sich damit nicht erzielen.

Der Erfindung liegt das Problem zu Grunde, das bekannte Erntesystem derart auszugestalten und weiterzubilden, dass die Ansteuerung der Arbeitsorgane der Erntemaschine hinsichtlich des Einschwingverhaltens optimiert wird.

Wesentlich ist die grundsätzliche Überlegung, in eine Kennfeldsteuerung, mit der sich durch die laufende, arbeitsorganspezifische Anpassung von Maschinenparametern bereits grundsätzlich eine effektive Ansteuerung der Arbeitsorgane erzielen lässt, gezielt Umfeldinformationen einfließen zu lassen, um das Einschwingverhalten weiter zu verbessern. Im Speicher des Fahrerassistenzsystems ist vorschlagsgemäß ein funktionales Systemmodell für zumindest einen Teil der Erntemaschine hinterlegt, das die Basis für die insbesondere autonome Ermittlung des mindestens einen Dreschwerksparameters bildet. Der Begriff "funktionales Systemmodell" bedeutet, dass zumindest ein Teil der funktionalen Zusammenhänge innerhalb der Erntemaschine von dem Systemmodell abgebildet werden.

Zur Klarstellung darf darauf hingewiesen werden, dass der Begriff "Umfeld" auf die Umgebung der selbstfahrenden Erntemaschine gerichtet ist. Er betrifft also nichts, was sich innerhalb des Mähdreschers abspielt. Den Umfeldinformationen ist ein räumlicher Geltungsbereich zugeordnet, der sich in der Umgebung der Erntemaschine befindet. Der räumliche Geltungsbereich einer Umfeldinformation bestimmt, welcher räumliche Bereich im Umfeld der Erntemaschine durch diese Umfeldinformation beschrieben wird.

Die vorschlagsgemäße Berücksichtigung von Umfeldinformationen ist insoweit vorteilhaft, als diese Informationen den Ernteprozess beeinflussen können, jedoch in der Regel unabhängig von dem Ernteprozess sind.

Im Einzelnen werden für die vorschlagsgemäße Berücksichtigung der mindestens einen Umfeldinformation zwei Alternativen vorgeschlagen.

In einer ersten Alternative wird vorgeschlagen, das der Kennfeldsteuerung zugrundeliegende Systemmodell in Abhängigkeit von mindestens einer Umgebungsinformation zu definieren oder zu modifizieren. Diese Definition kann beispielsweise durch eine Auswahl von Kennlinienfeldern in Abhängigkeit von den Umgebungsinformationen erfolgen. Die Modifikation erfolgt vorzugsweise durch eine Parametrierung der betreffenden Kennlinienfelder in Abhängigkeit von mindestens einer Umgebungsinformation.

In einer zweiten Alternative wird vorgeschlagen, der Kennfeldsteuerung einen auf mindestens einer Umgebungsinformation basierenden Steuerkreis zu überlagern. Dies bedeutet ganz allgemein, dass eine Anpassung von Maschinenparametern "an der Kennfeldsteuerung vorbei" möglich ist.

Es darf darauf hingewiesen werden, dass der Begriff "Steuerung" vorliegend weit auszulegen ist. Er umfasst sowohl eine Steuerung im engeren Sinne, bei der eine Rückkopplung im Sinne einer Regelung nicht vorgesehen ist. Er umfasst aber auch eine Regelung, bei der eine solche Rückkopplung gerade vorgesehen ist.

Anspruch 2 betrifft bevorzugte Ausgestaltungen, bei denen mindestens ein Arbeitsorgan zusammen mit dem Fahrerassistenzsystem mindestens einen Arbeitsautomaten bildet. Dies bedeutet, dass das Fahrerassistenzsystem mit seinem Speicher zum Hinterlegen von Daten und seiner Rechenvorrichtung dazu eingerichtet ist, basierend auf dem Systemmodell einzelne Maschinenparameter des Arbeitsorgans autonom zu ermitteln und dem Dreschwerk vorzugeben. Die Basis für die Ermittlung der Maschinenparameter bildet eine benutzerseitige Auswahl von Ernteprozessstrategien, die in dem Speicher des Fahrerassistenzsystems abgelegt sind.

Mit der vorschlagsgemäßen Realisierung mindestens eines Arbeitsautomaten kann durch eine einmalige Auswahl der aktiven Ernteprozessstrategie durch den Fahrer eine Art und Weise der Ansteuerung des Arbeitsorgans vorgegeben werden. Für die Ermittlung der Maschinenparameter im engeren Sinne ist eine weitere Eingabe vom Fahrer nicht erforderlich. Der Fahrer hat aber die Möglichkeit, die gewählte Ernteprozessstrategie auf Wunsch zu ändern, so dass daraufhin weiter eine autonome Ansteuerung stattfindet, jedoch dann ggf. mit einer anderen Priorisierung.

Bei der weiter bevorzugten Ausgestaltung gemäß Anspruch 4 werden neben den Umfeldinformationen auch Ernteprozessparameter berücksichtigt, die aus dem laufenden Ernteprozess resultieren. Bei dieser Variante erfolgt die Ansteuerung der Arbeitsorgane also sowohl basierend auf Umfeldinformationen, die weitgehend unabhängig vom Ernteprozess sind, als auch basierend auf Ernteprozessparametern, die aus dem Ernteprozess resultieren und damit abhängig von dem Ernteprozess sind.

Die Realisierung einer zentralen Datenaufbereitungsvorrichtung gemäß Anspruch 5 ist insoweit vorteilhaft, als eine Erzeugung von Umfeldinformationen aus Umfeldsensordaten auf besonders flexible Art und Weise möglich ist. Bei den Umfeldsensordaten handelt es sich um noch unbearbeitete oder lediglich vorverarbeitete Sensordaten, die aus den Sensorsignalen gewonnen werden. Solche Sensordaten können physikalische Entfernungsdaten, Bilddaten o. dgl. sein. Die Umfeldinformationen dagegen betreffen die Werte von Variablen, deren Wert eine reproduzierbare Auswirkung auf den Ernteprozess hat. Grundsätzlich kann die Datenaufbereitungsvorrichtung die Umfeldsensorsignale einzelner Umfeldsensoren zum Fahrerassistenzsystem auch lediglich durchleiten.

Mit der vorschlagsgemäßen Datenaufbereitungsvorrichtung ist gewissermaßen eine "Bündelung" der Umfeldsensorsignale möglich derart, dass die Existenz der mehreren Sensoren informationstechnisch besser ausgenutzt werden kann. Ein Beispiel hierfür ist die Erzeugung einer Redundanz hinsichtlich einer Umfeldinformation, indem die Umfeldinformation aus mehreren Umfeldsensorsignalen gleichen Informationsgehalts zurückgeht. Ein anderes Beispiel ist die Erzeugung einer Umfeldinformation aus mehreren Umfeldsensorsignalen unterschiedlichen Informationsgehalts. Eine solche Umfeldinformation ließe sich mit nur einem Umfeldsensor schlicht nicht erzeugen (Anspruch 7).

Die Umfeldsensoren können gemäß Anspruch 6 zahlreiche unterschiedliche Aspekte des Umfelds der Erntemaschine betreffen. Hierunter fallen beispielsweise Umfeldinformationen betreffend den Feldbestand, Umfeldinformationen betreffend die geometrischen Verhältnisse des den Feldbestand aufweisenden Feldes oder Umfeldinformationen betreffend die Feldumgebung.

Bei den besonders bevorzugten Ansprüchen 9 und 10 fließt der Geltungsbereich der jeweiligen Umfeldinformationen die Ermittlung der Maschinenparameter ein. Damit lässt sich die Einstellung der Maschinenparameter vorausschauend für einen in der Zukunft liegenden Prozesszeitpunkt ermitteln, was einer Schwingungsneigung bei der Einstellung eines Soll-Prozesszustands entgegenwirkt (Anspruch 10).

Die Ansprüche 11 bis 14 betreffen am Beispiel des Arbeitsorgans "Dreschwerk" mögliche Zusammenhänge zwischen Umfeldinformationen und Maschinenparametern, die sich mit dem vorschlagsgemäßen Erntesystem realisieren lassen.

Bei der weiter bevorzugten Ausgestaltung gemäß Anspruch 15 ist es schließlich vorgesehen, dass die Umfeldinformationen auch vom Vorfahrtregler der selbstfahrenden Erntemaschine, insbesondere bei der Einstellung der Fahrgeschwindigkeit berücksichtigt wird, insbesondere um einen vorgegebenen Erntegutdurchsatz garantieren zu können. Bei der zeitlich vorausschauenden Berücksichtigung der Umfeldinformation "Bestandsdichte" beispielsweise lässt sich die den Erntegutdurchsatz repräsentierende Schichthöhe leicht auf einen vorgegebenen Wert einstellen.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine Seitenansicht eines vorschlagsgemäßen Mähdreschers,
- Fig. 2: eine Draufsicht auf einen Feldhäcksler gemäß Fig. 1,

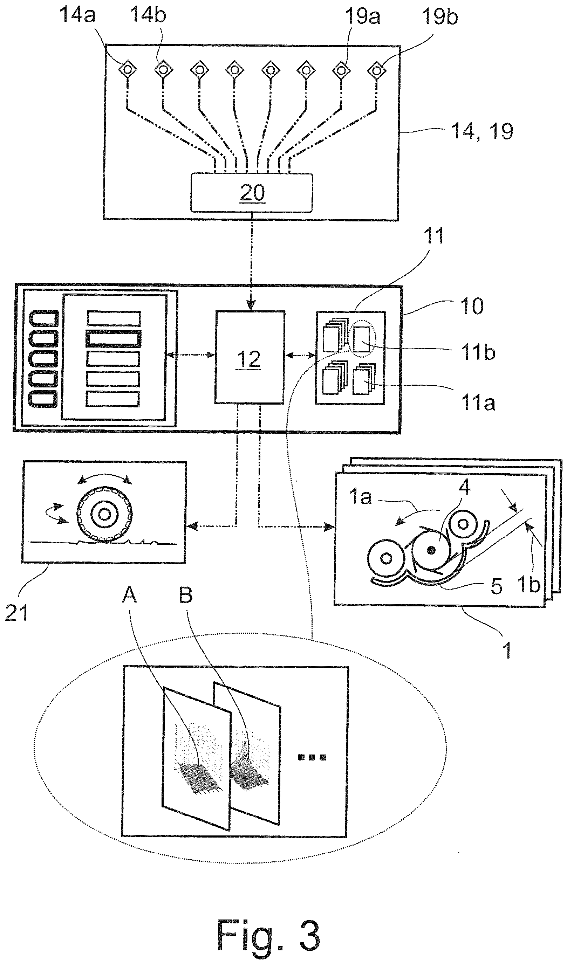

- Fig. 3: eine schematische Darstellung des Fahrerassistenzsystems des Mähdreschers gemäß Fig. 1,
- Fig. 4: zwei beispielhafte Kennlinienfelder des Systemmodells für den Ernteprozessparameter "Ausdruschverluste" mit den Eingangsgrößen a) "Schichthöhe" und "Trommeldrehzahl" und b) "Schichthöhe" und "Korbweite".

Ein vorschlagsgemäßes Erntesystem mit einer selbstfahrenden Erntemaschine kann auf unterschiedliche Anwendungsfälle ausgelegt sein. Nachfolgend steht die selbstfahrende Erntemaschine "Mähdrescher" im Vordergrund. Alle Ausführungen zu einem Mähdrescher gelten für alle anderen Arten von selbstfahrenden Erntemaschinen, insbesondere für einen Feldhächsler, entsprechend. Das Erntesystem kann grundsätzlich mehrere Erntemaschinen umfassen.

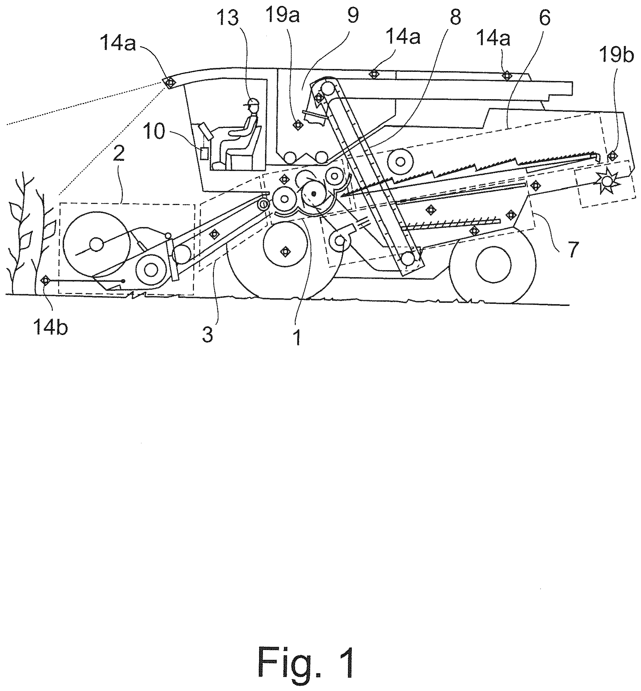

Der dargestellte Mähdrescher weist ein Dreschwerk 1 zum Dreschen von aufgenommenem Erntegut zu Korngut auf. Unter dem Erntegut ist dabei das gesamte vom Feldbestand aufgenommene und dem Dreschwerk 1 zugeführte Material zu verstehen, wobei das Korngut dann die von dem Mähdrescher aus dem Erntegut zu gewinnenden Körner bezeichnet. Wie in Fig. 1 zu erkennen ist, wird ein Feldbestand durch ein als Schneidwerk 2 ausgestaltetes Arbeitsorgan des Mähdreschers abgemäht und das somit gewonnene Erntegut durch einen Schrägförderer 3 dem Dreschwerk 1 zugeführt.

Das Dreschwerk 1 ist mit einer Dreschtrommel 4 ausgestattet, die mit einem Dreschkorb 5 zusammenwirkt. Dem Dreschwerk 1 ist eine Abscheideanordnung 6 prozesstechnisch nachgelagert. Der dem Dreschwerk 1 zugeführte Erntegutstrom wird also im Anschluss - ohne das bereits hier gewonnene Korngut - der Abscheideanordnung 6 zugeführt.

Grundsätzlich dient das Dreschwerk 1 zum Ausreiben des überwiegenden Teils des Kornguts aus dem Stroh des Ernteguts durch den Dreschvorgang. In dem als Abscheideanordnung 6 ausgestalteten Arbeitsorgan wird dann das Erntegut mit dem in ihm verbliebenen Kornanteil so bewegt, z.B. geschüttelt, dass auch das verbliebene Korngut möglichst aus dem Stroh und dem sonstigen Erntegut herausgetrennt wird. Das im Dreschwerk 1 und der Abscheideanordnung 6 gewonnene Korngut wird dann dem als Reinigungsanordnung 7 ausgestalteten Arbeitsorgan zugeführt. In der Reinigungsanordnung 7, welche regelmäßig mehrstufig ist, werden dann noch bis hierher im Korngut mitgeführte Nichtkornbestandteile, z.B. Spreu und Strohteile, sowie unausgedroschenes Material, wie etwa Ährenspitzen oder Grannen, von dem Korngut getrennt. Anschließend gelangt das gereinigte Korngut über eine Transportanordnung 8, z.B. einem Kornelevator, in einen Korntank 9. Das ausgedroschene Stroh - also das verbliebene Erntegut in der Abscheideanordnung 6 - wird von dem Mähdrescher abgelegt, z.B. als Schwad entlang der Fahrspur.

Die obigen Arbeitsorgane können jeweils durch die Vorgabe verschiedener Maschinenparameter angesteuert werden. Ein obiges Dreschwerk 1 kann beispielsweise durch die Vorgabe verschiedener Dreschwerksparameterparameter angesteuert werden. Hierunter fallen in Abhängigkeit vom Aufbau des Dreschwerks 1 Antriebsparameter wie beispielsweise eine Trommeldrehzahl 1a oder sonstige Bewegungskennzahlen der Dreschtrommel 4 sowie eine Korbweite 1b - also der Abstand zwischen der Dreschtrommel 4 und einem Dreschkorb 5. Sofern das Dreschwerk 1 Entgrannerklappen aufweist, können auch diese im Rahmen der Ansteuerung des Dreschwerks 1 verstellt werden.

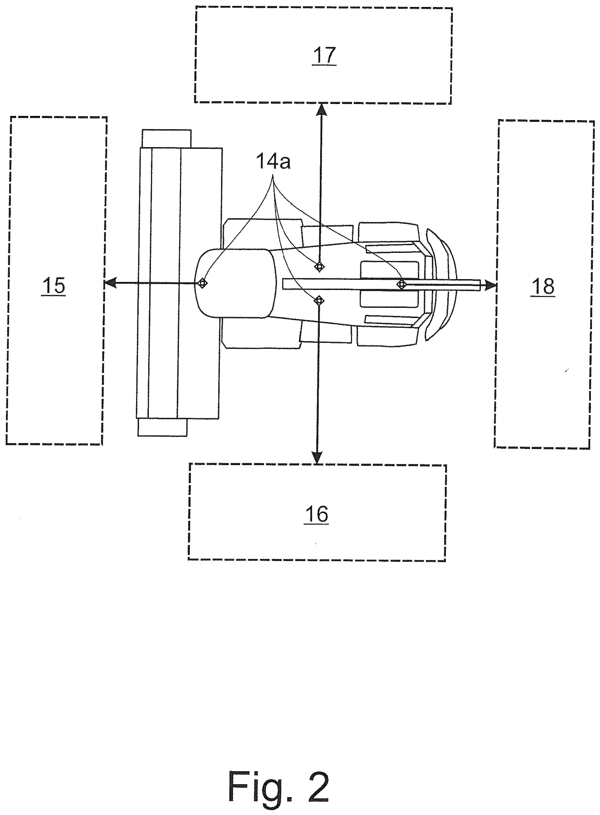

Die Erntemaschine weist ferner ein Fahrerassistenzsystem 10 zur sensorgestützten Ansteuerung der Arbeitsorgane auf. Dieses Fahrerassistenzsystem 10 umfasst einen Speicher 11 zum Hinterlegen von Daten - also einen Speicher im informationstechnischen Sinne - und eine Rechenvorrichtung 12 zur Verarbeitung der in dem Speicher 11 hinterlegten Daten. Grundsätzlich ist das Fahrerassistenzsystem dazu eingerichtet, einen Fahrer 13 des Mähdreschers bei der Bedienung des Mähdreschers zu unterstützen. Das Fahrerassistenzsystem 10 mit dem Speicher 11 und der Rechenvorrichtung 12 ist schematisch in Fig. 2 gezeigt.

Es ist weiter ein Umfeldsensorsystem 14 zu Erfassung mindestens einer den Ernteprozess beeinflussenden Umfeldinformation mit einem in der Umgebung der Erntemaschine befindlichen, räumlichen Geltungsbereich vorgesehen. Der Geltungsbereich einer Umfeldinformation kann grundsätzlich in einem vorwärtigen Bereich, einem rückwärtigen Bereich oder einem seitlichen Bereich der Erntemaschine gelegen sein (Fig. 2).

Bei dem dargestellten und insoweit bevorzugten Ausführungsbeispiel ist das Umfeldsensorsystem 14 an der Erntemaschine angeordnet. Alternativ dazu kann es jedoch vorgesehen sein, dass das Umfeldsensorsystem an einer weiteren, vorausfahrenden Erntemaschine angeordnet ist. Weiter ist es denkbar, dass das Umfeldsensorsystem 14 an einem von der Erntemaschine separaten Meßfahrzeug oder anderweitig separat von der Erntemaschine angeordnet ist.

In dem Speicher 11 des Fahrerassistenzsystems 10 ist ein funktionales Systemmodell 11b für zumindest einen Teil der Erntemaschine hinterlegt, wobei die Rechenvorrichtung 12 die oben angesprochene, insbesondere autonome Ermittlung des mindestens einen Dreschwerksparameters 1a, 1b basierend auf dem Systemmodell 11b vornimmt.

Bei dem funktionalen Systemmodell 11b handelt es sich um ein rechnerisches Modell zur Abbildung funktionaler Zusammenhänge innerhalb des Mähdreschers. Im Einzelnen ist durch das Systemmodell 11b mindestens einem Ernteprozessparameter mindestens ein Kennlinienfeld A, B zugeordnet, wobei dieser Ernteprozessparameter hier als Ausgangsgröße des mindestens einen Kennlinienfeldes A, B definiert ist und wobei als Eingangsgröße des mindestens einen Kennlinienfeldes A, B mindestens ein Maschinenparameter definiert ist.

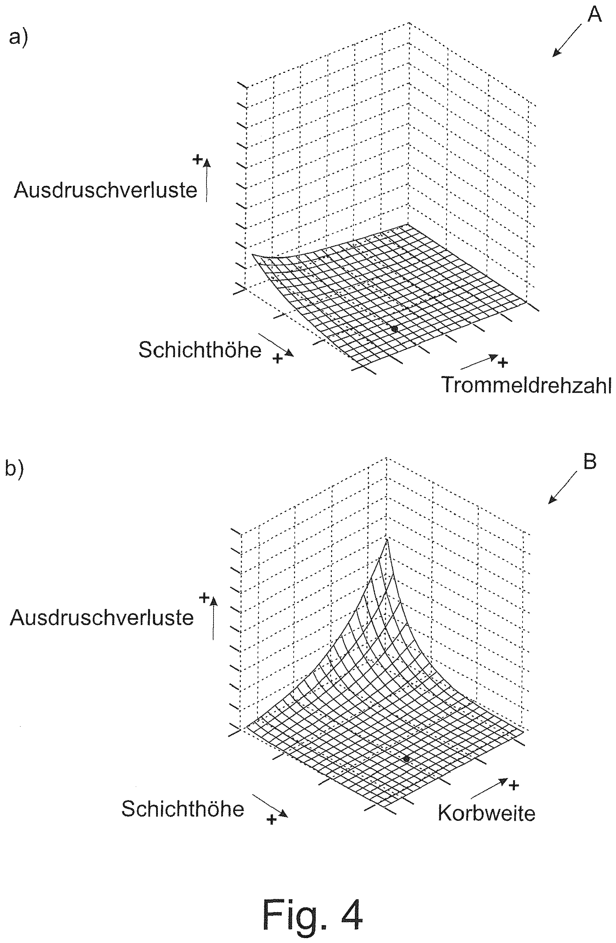

Zwei beispielhafte Kennlinienfelder sind in Fig. 4 dargestellt. Hier ist es so, dass der Ernteprozessparameter "Schichthöhe" und ein Maschinenparameter, vorzugsweise der Maschinenparameter "Trommeldrehzahl" oder der Maschinenparameter "Korbweite", als Eingangsgrößen für das mindestens eine Kennlinienfeld A, B definiert sind.

Zur Abbildung der beispielsweise das Dreschwerk 1 betreffenden funktionalen Zusammenhänge zwischen einem Ernteprozessparameter als Ausgangsgröße und verschiedenen Eingangsgrößen sind diesem Ernteprozessparameter vorzugsweise ein erstes Kennlinienfeld A und ein zweites Kennlinienfeld B zugeordnet. Dabei bilden für das erste Kennlinienfeld A der weitere Ernteprozessparameter "Schichthöhe" und der Maschinenparameter "Trommeldrehzahl" die Eingangsgrößen (Abbildung a) in Fig. 4), während für das zweite Kennlinienfeld B der weitere Ernteprozessparameter "Schichthöhe" und der Maschinenparameter "Korbweite" die Eingangsgrößen bilden (Abbildung b) in Fig. 4).

Hinsichtlich des Begriffs "Schichthöhe" darf darauf hingewiesen werden, dass dieser Begriff weit auszulegen ist und sowohl die Schichthöhe des vom Dreschwerk 1 aufgenommenen Gutstroms im engeren Sinne als auch den Durchsatz des durch das Dreschwerk 1 durchlaufenden Gutstroms umfasst. Insoweit gelten alle Ausführungen zu der Schichthöhe gleichermaßen für den Durchsatz. Insbesondere kann der Begriff "Schichthöhe" vorliegend durch den Begriff "Durchsatz" ersetzt werden.

Vorzugsweise sind in dem Systemmodell entsprechende Kennlinienfelder zu den Ernteprozessparametern "Ausdruschverluste" und "Abscheideverluste", dem die Dreschwerksbelastung repräsentierenden Ernteprozessparameter "Schlupf-Dreschwerk-Antrieb", dem Ernteprozessparameter "Bruchkornanteil" und dem Ernteprozessparameter "Reinigungsverluste" vorgesehen.

Die Rechenvorrichtung 12 arbeitet basierend auf dem Systemmodell 11b als Kennfeldsteuerung. Dies bedeutet ganz allgemein, dass die Rechenvorrichtung 12 der insbesondere autonomen Ermittlung der Maschinenparameter das mindestens eine Kennlinienfeld des Systemmodells 11b zugrunde legt. Hinsichtlich des weiten Verständnisses des Begriffs "Steuerung" darf auf dem allgemeinen Teil der Beschreibung verwiesen werden.

Bei der Ermittlung der Maschinenparameter definiert oder modifiziert die Rechenvorrichtung 12 das Systemmodell 11b in Abhängigkeit von mindestens einer Umfeldinformation. Alternativ oder zusätzlich kann es vorgesehen sein, dass die Rechenvorrichtung 12 der Kennfeldsteuerung einen auf mindestens einer Umfeldinformation basierenden Steuerkreis überlagert.

Die Überlagerung der Kennfeldsteuerung mit einem Steuerkreis bedeutet im einfachsten Fall, dass die Rechenvorrichtung den zu ermittelnde Maschinenparameter basierend auf mindestens einer Umfeldinformation berechnet oder modifiziert. Die Überlagerung der Kennfeldsteuerung mit einem Steuerkreis kann aber auch bedeuten, dass ein Steuerkreis der Kennfeldsteuerung mit dem auf der mindestens einen Umfeldinformation basierenden Steuerkreis verschachtelt wird.

Vorzugsweise bildet mindestens ein Arbeitsorgan, hier das Dreschwerk 1, zusammen mit dem Fahrerassistenzsystem 10 einen Arbeitsautomaten, hier einen Dreschautomaten. Dies ist vorschlagsgemäß dadurch realisiert, dass im Speicher 11 eine Mehrzahl auswählbarer Ernteprozessstrategien 11a hinterlegt sind und dass die Rechenvorrichtung 12 dazu eingerichtet ist, zur Umsetzung der ausgewählten Ernteprozessstrategie 11a bzw. der Ernteprozessstrategien 11a mindestens einen Maschinenparameter für das Dreschwerk 1 autonom zu ermitteln und dem Dreschwerk 1 vorzugeben. Auf diese Weise wird ein Dreschautomat bereitgestellt, welcher alle für die Arbeit des Dreschwerks 1 relevanten Größen umfassend untereinander koordiniert regelt. Es wird also insbesondere vermieden, dass von unterschiedlicher Seite konkurrierende und sich gegebenenfalls gegenseitig aushebelnde Ansteuerungen erfolgen. Vielmehr erfolgt die Ansteuerung aller relevanten Parameter "aus einer Hand". Ebenso kann der Fahrer 13 ein gewünschtes qualitatives Ergebnis vorgeben und braucht kein eigenes Expertenwissen zu den für dieses Ergebnis erforderlichen detaillierten Einzelheiten.

Es handelt sich bei der Ermittlung der Maschinenparameter um eine autonome Ermittlung insoweit, dass prinzipiell die Ernteprozessstrategie 11a durch die Rechenvorrichtung 12 umgesetzt wird, ohne dass bei der Ermittlung der Dreschwerksparameter 1a, 1b im engeren Sinne ein Eingreifen des Fahrers 13 oder eine Rückfrage an den Fahrer 13 nötig ist. Ein solches Eingreifen des Fahrers 13 ist demnach weiterhin prinzipiell möglich, aber nicht erforderlich. Dabei unterscheiden sich die hinterlegten Ernteprozessstrategien 11a in der Zielvorgabe der Einstellung oder der Optimierung von Ernteprozessparametern, wie noch erläutert wird.

Es darf darauf hingewiesen werden, dass das Fahrerassistenzsystem 10 grundsätzlich zentral ausgestaltet sein kann. Es dient insoweit der Ansteuerung nicht nur des Dreschwerks 1, sondern auch vor- und nachgelagerter Arbeitsorgane, wie des Schneidwerks 2, des Schrägförderers 3, der Abscheideanordnung 6, der Reinigungsanordnung 7 sowie der Verteilanordnung 8. Grundsätzlich ist es aber denkbar, dass das Fahrerassistenzsystem 10 dezentral strukturiert ist und aus einer Anzahl einzelner Steuersysteme zusammengesetzt ist. Dann kann es beispielsweise vorgesehen sein, dass zumindest ein Teil der Arbeitsorgane der Erntemaschine jeweils ein zugeordnetes, dezentrales Steuersystem aufweisen.

Vorzugsweise ist die Rechenvorrichtung 12 dazu eingerichtet, die Maschinenparameter zyklisch zu ermitteln und dem jeweiligen Arbeitsorgan vorzugeben. Alternativ oder zusätzlich ist es so, dass die Rechenvorrichtung 12 dazu eingerichtet ist, das Systemmodell 11b zyklisch zu definieren bzw. zu modifizieren. Der Begriff "zyklisch" ist dabei weit zu verstehen und bedeutet hier eine fortlaufende Ermittlung, Definition oder Modifikation mit konstanter, aber auch mit sich verändernder Zykluszeit.

Zusätzlich zu dem Umfeldsensorsystem 14 ist der Erntemaschine vorzugsweise ein Ernteprozesssensorsystem 19 mit mehreren Ernteprozesssensoren zur Ermittlung von aus dem Ernteprozess resultierenden Ernteprozessparametern wie "Ausdruschverluste", "Bruchkornanteil", "Schichthöhe", "Abscheideverluste", "Reinigungsverluste", "Schlupf-Dreschwerk-Antrieb", "Kraftstoffverbrauch" zugeordnet, wobei die Rechenvorrichtung 12 die von dem Ernteprozesssensorsystem 19 erzeugten Ernteprozessparameter bei der Ermittlung der Maschinenparameter berücksichtigt.

Vorzugsweise ist das Ernteprozesssensorsystem 19 mit mehreren Sensoren ausgestattet. Beispielsweise weist das Ernteprozesssensorsystem 19 einen Korngutsensor 19a zur Erfassung einer Korngutinformation auf. Der Korngutsensor 19a kann dabei - gemäß der Darstellung der Fig. 1 - als Kornkameraanordnung ausgestaltet sein. Der Korngutsensor 19a kann insbesondere zur Erfassung eines oben angesprochenen Bruchkornanteils, eines Nichtkornanteils, eines Grannenkornanteils und/oder eines Ährenspitzenanteils eingerichtet sein. Alternativ oder zusätzlich kann das Ernteprozesssensorsystem 19 - wie ebenfalls in der Fig. 1 dargestellt - einen Schwadsensor 19b zur Erfassung einer Schwadinformation aufweisen. Ein Schwadsensor 19b lässt sich bei geeigneter Auslegung zur Erfassung eines Kornanteils im Schwad nutzen. Ein solcher Kornanteil stellt entsprechend einen Verlust an Korngut dar.

Das Umfeldsensorsystem 14 weist hier und vorzugsweise mehrere Umfeldsensoren 14a, 14b zur Erzeugung von Umfeldsensordaten auf, wobei das Umfeldsensorsystem 14 eine Datenaufbereitungsvorrichtung 20 aufweist, die aus den Umfeldsensordaten Umfeldinformationen erzeugt und dem Fahrerassistenzsystem 10 bereitstellt. Grundsätzlich kann die Datenaufbereitungsvorrichtung 20 die Umfeldsensorsignale einzelner Umfeldsensoren 14a, 14b zum Fahrerassistenzsystem 10 auch lediglich durchleiten.

Hier und vorzugsweise ist es so, dass die Datenaufbereitungsvorrichtung 20 in obiger Weise nicht nur mit den Umfeldsensoren 14a, 14b, sondern auch mit den Ernteprozesssensoren 19a, 19b des Ernteprozesssensorsystems 19 zusammenwirkt und aus den Ernteprozesssensordaten die entsprechenden Ernteprozessparameter erzeugt. Insoweit kommt der Datenaufbereitungsvorrichtung 20 eine Doppelrolle zu. Grundsätzlich kann es auch hier vorgesehen sein, dass die Datenaufbereitungsvorrichtung 20 die Ernteprozesssensorsignale einzelner Ernteprozesssensoren 19a, 19b zum Fahrerassistenzsystem 10 lediglich durchleitet.

Bei den Umfeldsensoren 14a, 14b handelt es sich vorzugsweise um solche Sensoren, die Umfeldsensordaten zu den das Feld, insbesondere den Feldbestand, betreffende Gegebenheiten erfassen. In besonders bevorzugter Ausgestaltung ist mindestens ein Umfeldsensor 14a, 14b ein Abstandssensor, ein bildgebender Sensor, ein Feuchtesensor, ein Temperatursensor, o. dgl.. Dabei können optische Sensoren, insbesondere Kamerasensoren und/oder Lasersensoren und/oder Radarsensoren Anwendung finden. Bei dem in Fig. 1 dargestellten Ausführungsbeispiel handelt es sich bei dem Umfeldsensor 14a um einen bildgebenden Sensor in Form einer 3D-Kamera, während der Umfeldsensor 14b als Feuchtesensor für die Erzeugung einer die Bestandsfeuchte betreffende Umfeldinformation ausgestaltet ist. Andere Möglichkeiten bestehen darin, mit weiteren Umfeldsensoren Aufschluss über die Bestandshöhe, die Bestandsbreite, die Bestandsdichte o. dgl. zu gewinnen.

Die hier und vorzugsweise zentrale Datenaufbereitungsvorrichtung 20 ermöglicht die Erzeugung zahlreicher Umfeldinformationen aus den jeweiligen Umfeldsensordaten. Hierzu gehören vorzugsweise Umfeldinformationen betreffend den Feldbestand wie "Bestandsdichte", "Bestandshöhe", "Bestandszusammensetzung", "Bestandsreifegrad", "Lagerfruchtinformationen", "Fremdpflanzenanteil", "Grüngutanteil", "Bestandsuntergrund", "Bestandskantengeometrie", o. dgl.. Hierzu gehören weiter vorzugsweise Umfeldinformationen betreffend die geometrischen Verhältnisse des den Feldbestand aufweisenden Feldes in dem jeweiligen Geltungsbereich wie "Hindernisaufkommen", "Bodentopologie" o. dgl.. Hierzu gehören schließlich Umfeldinformationen betreffend die Feldumgebung in dem jeweiligen Geltungsbereich wie "Staubaufkommen", "Umgebungstemperatur", "Umgebungsluftfeuchte" o. dgl..

Dadurch, dass die Datenaufbereitungsvorrichtung 20 datentechnisch mit mehreren Umfeldsensoren gekoppelt ist, kann es ohne weiteres vorgesehen sein, dass die Datenaufbereitungsvorrichtung 20 aus den Umfeldsensordaten von mindestens zwei unterschiedlichen Umfeldsensoren eine Umfeldinformation erzeugt. Beispielsweise kann es vorgesehen sein, dass die Datenaufbereitungsvorrichtung 20 aus den Umfeldsensordaten die Umfeldinformationen betreffend die Bestandsdichte und die Bestandshöhe und daraus die Umfeldinformation betreffend das Erntegutvolumen ermittelt. Alternativ oder zusätzlich kann es vorgesehen sein, dass die Datenaufbereitungsvorrichtung 20 aus den Umfeldsensordaten die Umfeldinformationen betreffend die Bestandsdichte, Bestandshöhe und Bestandsfeuchte und daraus die Umfeldinformation betreffend die Erntegutmasse ermittelt.

Mit der hier bevorzugten Berücksichtigung der Geltungsbereiche 15-18 der Umfeldinformationen von der Rechenvorrichtung 12 bei der Ermittlung der Maschinenparameter lässt sich sicherstellen, dass die Umfeldinformationen gezielt und zum richtigen Zeitpunkt bei der Ansteuerung zur Anwendung gebracht werden. Vorzugsweise ist es so, dass die Geltungsbereiche 15-18 der Umfeldinformationen jeweils im Speicher 11 hinterlegt oder hinterlegbar sind.

Insbesondere für den Fall, dass sich der räumliche Geltungsbereich einer Umfeldinformation relativ zu der Erntemaschine verändern kann, ist es vorteilhaft, wenn das Umfeldsensorsystem 14 dazu eingerichtet ist, neben den Umfeldinformationen den räumlichen Geltungsbereich der Umfeldinformationen an das Fahrerassistenzsystem 10 weiterzugeben. Eine solche Veränderlichkeit des Geltungsbereichs kann sich beispielsweise durch eine Änderung der Parametrierung des jeweiligen Umfeldsensors 14a, 14b wie beispielsweise eine Änderung der Stellung eines als Kamera ausgestalteten Umfeldsensors ergeben.

Auf der Basis von Umfeldinformationen, die erst in der Zukunft eine Auswirkung auf den Ernteprozess haben, kann die Rechenvorrichtung 12 zusammen mit den jeweils zugeordneten Geltungsbereichen und den Fortbewegungsparametern der Erntemaschine wie Fahrgeschwindigkeit und Fahrspur eine Vorhersage für mindestens eine zu einem zukünftigen Prozesszeitpunkt an der Erntemaschine vorherrschende Umfeldinformation erzeugen. Insbesondere kann die Rechenvorrichtung 12 für diesen Prozesszeitpunkt mindestens einen Maschinenparameter basierend auf den vorhergesagten Umfeldinformationen und ggf. auf weiteren Informationen insbesondere autonom ermitteln und dem jeweiligen Arbeitsorgan zum Prozesszeitpunkt oder zu einem eine Einstellzeit des Maschinenparameters berücksichtigenden, dem Prozesszeitpunkt vorgelagerten Zeitpunkt vorgeben. Damit ist eine Einstellung von Maschinenparametern für einen Prozesszeitpunkt mit einer für genau diesen Prozesszeitpunkt aktuellen Datenbasis möglich.

Im Folgenden werden einige Beispiele für das resultierende Verhalten eines vorschlagsgemäßen Erntesystems mit einer als Mähdrescher ausgestalteten Erntemaschine anhand des dortigen Arbeitsorgans eines Dreschwerks 1 beschrieben. Das Dreschwerkl lässt sich wie oben angedeutet über eine Vorgabe der Maschinenparameter "Trommeldrehzahl" und "Korbweite" ansteuern. Das resultierende Verhalten des Erntesystems ergibt sich aus der vorschlagsgemäßen Definition oder Modifikation der Kennlinienfelder bzw. aus der Überlagerung der Kennfeldsteuerung mit einem auf den Umfeldinformationen basierenden Steuerkreis.

In einer ersten Variante eines vorschlagsgemäßen Maschinenverhaltens schließt die Rechenvorrichtung 12 bei einer Erhöhung der Umfeldinformationen "Grüngutanteil" und/oder "Fremdpflanzenanteil" und/oder "Bestandshöhe" und/oder "Bestandsdichte" auf eine anstehende Erhöhung der Dreschwerksbelastung und erhöht zur Reduzierung der Dreschwerksbelastung die Korbweite erhöht und/oder die Trommeldrehzahl.

In einer zweiten Variante eines vorschlagsgemäßen Maschinenverhaltens schließt die Rechenvorrichtung 12 bei einer Absenkung der Umfeldinformation "Bestandsdichte" auf eine anstehende Erhöhung der Ausdruschverluste und sieht vor, zur Reduzierung der Ausdruschverluste die Korbweite zu reduzieren und/oder die Trommeldrehzahl zu erhöhen.

In einer dritten Variante eines vorschlagsgemäßen Maschinenverhaltens reduziert die Rechenvorrichtung auf eine Absenkung der Gutfeuchte und auf einen Anstieg des Bruchkornanteils die Dreschtrommeldrehzahl.

Die erzeugten Umfeldinformationen können nicht nur bei der Ansteuerung von Arbeitsorganen, sondern auch bei der Ansteuerung des Fahrantriebs der Erntemaschine vorteilhaft Anwendung finden. Vorzugsweise weist die Erntemaschine einen Fahrantrieb und einen Vorfahrtregler 21 auf, wobei der Vorfahrtregler 21 die Fahrgeschwindigkeit der Erntemaschine in Abhängigkeit von den Umgebungsinformationen einstellt. Beispielsweise ist es in diesem Sinne vorgesehen, dass der Vorfahrtregler 21 in Abhängigkeit von Erntegutvolumen und/oder Erntegutmasse einen vorgegebenen Erntegutdurchsatz einstellt. Alternativ oder zusätzlich kann der Vorfahrtregler 21 auch der Erzeugung von Sollfahrspuren dienen, die durch einen Lenkantrieb umgesetzt werden. Damit ist es beispielsweise möglich, basierend auf den Umfeldinformationen die Sollfahrtspuren an Bestandskanten auszurichten oder Hindernissen auszuweichen.

### Bezugszeichenliste

- 1: Dreschwerk
- 1a: Trommeldrehzahl
- 1b: Korbweite 1b
- 2: Schneidwerk
- 3: Schrägförderer
- 4: Dreschtrommel
- 5: Dreschkorb
- 6: Abscheidevorrichtung
- 7: Reinigungsvorrichtung
- 8: Transportanordnung
- 9: Korntank
- 10: Fahrerassistenzsystem
- 11: Speicher
- 11a: Ernteprozessstrategie
- 11b: Systemmodell
- 12: Rechenvorrichtung
- 13: Fahrer
- 14: Umfeldsensorsystem
- 14a: Kamera
- 14b: Feuchtesensor
- 15-18: Geltungsbereiche
- 19: Ernteprozesssensorsystem
- 19a: Korngutsensor
- 19b: Schwadsensor
- 20: Datenaufbereitungsvorrichtung
- A,B: Kennlinienfelder

## Patentansprüche

1. Erntemaschine mit einer selbstfahrenden Erntemaschine, insbesondere einem Mähdrescher, wobei die Erntemaschine mehrere Arbeitsorgane (1, 2, 6, 7) zum Verarbeiten des von einem Feld aufgenommenen Ernteguts und ein Fahrerassistenzsystem (10) zur sensorgestützten Ansteuerung der Arbeitsorgane (1, 2, 6, 7) aufweist, wobei das Fahrerassistenzsystem einen Speicher (11) zum Hinterlegen von Daten und eine Rechenvorrichtung (12) zur Verarbeitung der in dem Speicher (11) hinterlegten Daten umfasst, wobei ein Umfeldsensorsystem (14) zu Erfassung mindestens einer den Ernteprozess beeinflussenden Umfeldinformation mit einem in der Umgebung der Erntemaschine befindlichen, räumlichen Geltungsbereich (15-18) vorgesehen ist,
**dadurch gekennzeichnet,**
**dass** in dem Speicher (11) ein funktionales Systemmodell (11b)welches zumindest einen Teil der funktionale Zusammenhänge innerhalb der Erntemaschine abbildet, und für zumindest einen Teil der Erntemaschine hinterlegt ist, dass die Rechenvorrichtung (12) basierend auf dem Systemmodell (11b) als Kennfeldsteuerung arbeitet und Maschinenparameter mindestens eines Arbeitsorgans (1, 2, 6, 7) insbesondere autonom ermittelt und dem jeweiligen Arbeitsorgan (1, 2, 6, 7) vorgibt und dass die Rechenvorrichtung (12) bei der Ermittlung der Maschinenparameter das Systemmodell (11b) in Abhängigkeit von mindestens einer Umfeldinformation definiert oder modifiziert und/oder dass die Rechenvorrichtung (12) bei der Ermittlung der Maschinenparameter der Kennfeldsteuerung einen auf mindestens einer Umfeldinformation basierenden Steuerkreis überlagert.

2. Erntemaschine nach Anspruch 1, **dadurch gekennzeichnet, dass** mindestens ein Arbeitsorgan (1, 2, 6, 7) zusammen mit dem Fahrerassistenzsystem (10) mindestens einen Arbeitsautomaten, vorzugsweise einen Dreschautomaten, bildet, indem im Speicher (11) eine Mehrzahl auswählbarer Ernteprozessstrategien (11a) hinterlegt sind und indem die Rechenvorrichtung (12) dazu eingerichtet ist, zur Umsetzung der jeweils ausgewählten Ernteprozessstrategie (11a) basierend auf dem Systemmodell (11b) mindestens einen Maschinenparameter, vorzugsweise mindestens einen Dreschwerksparameter, autonom zu ermitteln und dem Arbeitsorgan (1, 2, 6, 7) vorzugeben.

3. Erntemaschine nach Anspruch 1 oder 2, **dadurch gekennzeichnet, dass** die Rechenvorrichtung (12) dazu eingerichtet ist, die Maschinenparameter zyklisch zu ermitteln und dem Arbeitsorgan (1, 2, 6, 7) vorzugeben, und/oder, dass die Rechenvorrichtung (12) dazu eingerichtet ist, das Systemmodell (11b) zyklisch zu definieren bzw. zu modifizieren.

4. Erntemaschine nach einem der vorhergehenden Ansprüche, **dadurch gekennzeichnet, dass** ein Ernteprozesssensorsystem (19) mit mehreren Ernteprozesssensoren (19a, 19b) zur Ermittlung von aus dem Ernteprozess resultierenden Ernteprozessparametern vorgesehen ist und dass die Rechenvorrichtung die von dem Ernteprozesssensorsystem (19) erzeugten Ernteprozessparameter bei der Ermittlung der Maschinenparameter berücksichtigt.

5. Erntemaschine nach einem der vorhergehenden Ansprüche, **dadurch gekennzeichnet, dass** das Umfeldsensorsystem (14) mehrere Umfeldsensoren (14a, 14b) zur Erzeugung von Umfeldsensordaten aufweist und dass das Umfeldsensorsystem (14) eine Datenaufbereitungsvorrichtung (20) aufweist, die aus den Umfeldsensordaten Umfeldinformationen erzeugt und dem Fahrerassistenzsystem (10) bereitstellt.

6. Erntemaschine nach einem der vorhergehenden Ansprüche, **dadurch gekennzeichnet, dass** die Datenaufbereitungsvorrichtung (20) aus den Umfeldsensordaten Umfeldinformationen betreffend den Feldbestand in dem jeweiligen Geltungsbereich wie "Bestandsdichte", "Bestandshöhe", "Bestandszusammensetzung", "Bestandsreifegrad", "Lagerfruchtinformationen", "Fremdpflanzenanteil", "Grüngutanteil", "Bestandsuntergrund", "Bestandskantengeometrie", o. dgl. erzeugt, und/oder, dass die Datenaufbereitungsvorrichtung (20) aus den Umfeldsensordaten Umfeldinformationen betreffend die geometrischen Verhältnisse des den Feldbestand aufweisenden Feldes in dem jeweiligen Geltungsbereich wie "Hindernisaufkommen", "Bodentopologie" o. dgl. erzeugt, und/oder, dass die Datenaufbereitungsvorrichtung aus den Umfeldsensordaten Umfeldinformationen betreffend die Feldumgebung in dem jeweiligen Geltungsbereich wie "Staubaufkommen", "Umgebungstemperatur", "Umgebungsluftfeuchte" o. dgl. erzeugt.

7. Erntemaschine nach einem der vorhergehenden Ansprüche, **dadurch gekennzeichnet, dass** die Datenaufbereitungsvorrichtung (20) aus den Umfeldsensordaten von mindestens zwei unterschiedlichen Umfeldsensoren eine Umfeldinformation erzeugt, vorzugsweise, dass die Datenaufbereitungsvorrichtung (20) aus den Umfeldsensordaten die Umfeldinformationen betreffend die Bestandsdichte und die Bestandshöhe und daraus die Umfeldinformation betreffend das Erntegutvolumen ermittelt, und/oder, dass die Datenaufbereitungsvorrichtung (20) aus den Umfeldsensordaten die Umfeldinformationen betreffend die Bestandsdichte, Bestandshöhe und Bestandsfeuchte und daraus die Umfeldinformation betreffend die Erntegutmasse ermittelt.

8. Erntemaschine nach einem der vorhergehenden Ansprüche, **dadurch gekennzeichnet, dass** die Geltungsbereiche der Umfeldinformationen von der Rechenvorrichtung (12) bei der Ermittlung der Maschinenparameter berücksichtigt werden, vorzugsweise, dass die Geltungsbereiche der Umfeldinformationen jeweils im Speicher (11) hinterlegt oder hinterlegbar sind.

9. Erntemaschine nach einem der vorhergehenden Ansprüche, **dadurch gekennzeichnet, dass** der Geltungsbereich in einem vorwärtigen Bereich, einem rückwärtigen Bereich oder einem seitlichen Bereich der Erntemaschine gelegen ist, vorzugsweise, dass das Umfeldsensorsystem (14) dazu eingerichtet ist, neben den Umfeldinformationen den räumlichen Geltungsbereich (15-18) der Umfeldinformationen an das Fahrerassistenzsystem (10) weiterzugeben.

10. Erntemaschine nach einem der vorhergehenden Ansprüche, **dadurch gekennzeichnet, dass** die Rechenvorrichtung (12) aus den Umfeldinformationen, den jeweils zugeordneten Geltungsbereichen (15-18) und den Fortbewegungsparametern wie Fahrgeschwindigkeit und Fahrspur eine Vorhersage für mindestens eine zu einem zukünftigen Prozesszeitpunkt an der Erntemaschine vorherrschende Umfeldinformation erzeugt und, vorzugsweise, dass die Rechenvorrichtung (12) für den Prozesszeitpunkt mindestens einen Maschinenparameter basierend auf den vorhergesagten Umfeldinformationen und ggf. auf weiteren Informationen insbesondere autonom ermittelt und dem jeweiligen Arbeitsorgan zum Prozesszeitpunkt oder zu einem eine Einstellzeit des Maschinenparameters berücksichtigenden, dem Prozesszeitpunkt vorgelagerten Zeitpunkt, vorgibt.

11. Erntemaschine nach einem der vorhergehenden Ansprüche, **dadurch gekennzeichnet, dass** ein Arbeitsorgan (1) als Dreschwerk mit Dreschtrommel (4) und Dreschkorb (5) ausgebildet ist und über eine Vorgabe der Maschinenparameter "Trommeldrehzahl" und "Korbweite" ansteuerbar ist.

12. Erntemaschine nach Anspruch 11, **dadurch gekennzeichnet, dass** die Rechenvorrichtung (12) auf eine Erhöhung der Umfeldinformationen "Grüngutanteil" und/oder "Fremdpflanzenanteil" und/oder "Bestandshöhe" und/oder "Bestandsdichte" zur Reduzierung der Dreschwerksbelastung die Korbweite erhöht und/oder die Trommeldrehzahl erhöht.

13. Erntemaschine nach Anspruch 11 oder 12, **dadurch gekennzeichnet, dass** die Rechenvorrichtung (12) auf eine Absenkung der Umfeldinformation "Bestandsdichte" zur Reduzierung der Ausdruschverluste die Korbweite reduziert und/oder die Trommeldrehzahl erhöht.

14. Erntemaschine nach einem der Ansprüche 11 bis 13, **dadurch gekennzeichnet, dass** die Rechenvorrichtung (12) auf eine Absenkung der Gutfeuchte und auf einen Anstieg des Bruchkornanteils die Dreschtrommeldrehzahl reduziert.

15. Erntemaschine nach einem der Ansprüche 11 bis 14, **dadurch gekennzeichnet, dass** die Erntemaschine einen Fahrantrieb und einen Vorfahrtregler aufweist und dass der Vorfahrtregler die Fahrgeschwindigkeit der Erntemaschine in Abhängigkeit von den Umgebungsinformationen einstellt, vorzugsweise, dass der Vorfahrtregler in Abhängigkeit von Erntegutvolumen und/oder Erntegutmasse einen vorgegebenen Erntegutdurchsatz einstellt.

## Claims

1. A harvester having a self-propelled harvester, in particular a combine harvester, wherein the harvester has a plurality of working members (1, 2, 6, 7) for processing the crop material which is picked up from a field and a driver assist system (10) for sensor-supported actuation of the working members (1, 2, 6, 7), wherein the driver assist system has a memory (11) for the storage of data and a computing device (12) for processing the data stored in the memory (11), wherein an environment sensor system (14) is provided for detecting at least one item of environment information influencing the harvesting process with a spatial scope of application (15-18) in the surroundings of the harvester,
**characterised in that** stored in the memory (11) is a functional system model (11b) which represents at least a part of the functional relationships within the harvester and for at least a part of the harvester, the computing device (1) operates based on the system model (11b) as a characteristic set control and in particular autonomously ascertains machine parameters at least of a working member (1, 2, 6, 7) and presets same for the respective working member (1, 2, 6, 7) and the computing device (12) in ascertaining the machine parameters defines or modifies the system model (11b) in dependence on at least one item of environment information and/or the computing device (12) in ascertaining the machine parameters of the characteristic set control superimposes a control circle based on at least one item of environment information.

2. A harvester according to claim 1 **characterised in that** at least one working member (1, 2, 6, 7) together with the driver assist system (10) forms at least one automatic working machine, preferably an automatic threshing device, insofar as a plurality of selectable harvesting process strategies (11a) are stored in the memory (11) and the computing device (12) is adapted for implementation of the respectively selected harvesting process strategy (11a) based on the system model (11b) to autonomously ascertain at least one machine parameter, preferably at least one threshing mechanism parameter, and to preset same for the working member (1, 2, 6, 7).

3. A harvester according to claim 1 or claim 2 **characterised in that** the computing device (12) is adapted to cyclically ascertain the machine parameters and preset same for the working member (1, 2, 6, 7) and/or the computing device (12) is adapted to cyclically define or modify the system model (11b).

4. A harvester according to one of the preceding claims **characterised in that** there is provided a harvesting process sensor system (19) having a plurality of harvesting process sensors (19a, 19b) for ascertaining harvesting process parameters resulting from the harvesting process and the computing device takes account of the harvesting process parameters generated by the harvesting process sensor system (19) in ascertaining the machine parameters.

5. A harvester according to one of the preceding claims **characterised in that** the environment sensor system (14) has a plurality of environment sensors (14a, 14b) for generating environment sensor data and the environment sensor system (14) has a data processing device (20) for generating environment information from the environment sensor data and providing it for the driver assist system (10).

6. A harvester according to one of the preceding claims **characterised in that** the data processing device (20) generates from the environment sensor data items of environment information concerning the crop stand in the respective scope of application such as "stand density", "stand height", "stand composition", "stand ripeness", "storage crop information", "foreign plant proportion", "green crop proportion", "stand soil", "stand edge geometry" or the like and/or the data processing device (20) generates from the environment sensor data environment information concerning the geometrical conditions of the field having the field stand in the respective scope of application such as "obstacle encounter", "soil topology" or the like and/or the data processing device generates from the environment sensor data environment information concerning the field surroundings in the respective scope of application such as "dust occurrence", "ambient temperature", "ambient air humidity" or the like.

7. A harvester according to one of the preceding claims **characterised in that** the data processing device (20) generates from the environment sensor data of at least two different environment sensors an item of environment information, preferably the data processing device (20) ascertains from the environment sensor data the items of environment information concerning the stand density and the stand height and therefrom the environment information concerning the crop material volume and/or the data processing device (20) ascertains from the environment sensor data the items of environment information concerning the stand density, stand height and stand moisture content and therefrom the environment information concerning the crop material mass.

8. A harvester according to one of the preceding claims **characterised in that** the scopes of application of the items of environment information are taken into account by the computing device (12) in ascertaining the machine parameters, and preferably the scopes of application of the items of environment information are or can be respectively stored in the memory (11).

9. A harvester according to one of the preceding claims **characterised in that** the scope of application is disposed in a forward region, a rearward region or a lateral region of the harvester, and preferably the environment sensor system (4) is adapted besides the environment information to pass the spatial scope of application (15-18) of the environment information to the driver assist system (10).

10. A harvester according to one of the preceding claims **characterised in that** the computing device (12) generates from the environment information, the respectively associated applicability scopes (15-18) and the advance movement parameters like travel speed and travel route a prediction for at least one item of environment information prevailing at a future process time at the harvester and preferably the computing device (12) for the process time in particular autonomously ascertains at least one machine parameter based on the predicted items of environment information and possibly on further items of information and presets same for the respective working member at the process time or at a time which takes account of the adjustment time of the machine parameter and which precedes the process time.

11. A harvester according to one of the preceding claims **characterised in that** a working member (12) is in the form of a threshing mechanism having a threshing drum (4) and a threshing concave (5) and is actuable by way of presetting of the machine parameters "rotary drum speed" and "concave width".

12. A harvester according to claim 11 **characterised in that** the computing device (12) upon an increase in the items of environment information "green crop proportion" and/or "foreign plant proportion" and/or "stand height" and/or "stand density" for reducing the threshing mechanism load increases the concave width and/or increases the rotary drum speed.

13. A harvester according to claim 11 or claim 12 **characterised in that** the computing device (12) upon a reduction in the environment information "stand density" to reduce the threshing losses reduces the concave width and/or increases the rotary drum speed.

14. A harvester according to one of claims 11 to 13 **characterised in that** the computing device (12) upon a reduction in the crop moisture content and an increase in the broken grain proportion reduces the rotary threshing drum speed.

15. A harvester according to one of claims 11 to 14 **characterised in that** the harvester has a travel drive and a forward travel controller and the forward travel controller adjusts the travel speed of the harvester in dependence on the environment information and preferably the forward travel controller adjusts a predetermined crop material throughput in dependence on crop material volume and/or crop material mass.

## Revendications

1. Machine de récolte comprenant une machine de récolte automotrice, en particulier une moissonneuse-batteuse, la machine de récolte comportant plusieurs organes de travail (1, 2, 6, 7) pour traiter le produit récolté ramassé sur le champ et un système d'assistance à la conduite (10) en vue d'une commande assistée par capteurs des organes de travail (1, 2, 6, 7), le système d'assistance à la conduite incluant une mémoire (11) pour enregistrer des données et un dispositif de calcul (12) pour traiter les données enregistrées dans la mémoire (11), un système de capteurs d'environnement (14) étant prévu pour détecter au moins une information d'environnement influant sur le processus de récolte et possédant une zone de validité spatiale (15-18) se trouvant dans l'environnement de la machine de récolte, **caractérisée en ce que** dans la mémoire (11) est enregistré un modèle de système fonctionnel (11b), qui représente au moins une partie des relations fonctionnelles à l'intérieur de la machine de récolte, et pour au moins une partie de la machine de récolte, **en ce que** le dispositif de calcul (12) fonctionne sur la base du modèle de système (11b) comme commande de diagramme caractéristique, et détermine, en particulier de manière autonome, des paramètres machine au moins d'un organe de travail (1, 2, 6, 7) et les prescrit à l'organe de travail respectif (1, 2, 6, 7), et **en ce que**, lors de la détermination des paramètres machine, le dispositif de calcul (12) définit ou modifie le modèle de système (11b) en fonction d'au moins une information d'environnement et/ou **en ce que**, lors de la détermination des paramètres machine de la commande de diagramme caractéristique, le dispositif de calcul (12) superpose un circuit de commande basé sur au moins une information d'environnement.

2. Machine de récolte selon la revendication 1, **caractérisée en ce qu'**au moins un organe de travail (1, 2, 6, 7) forme, conjointement avec le système d'assistance à la conduite (10), au moins un automate de travail, de préférence un automate de battage, par le fait que dans la mémoire (11) est enregistrée une pluralité de stratégies de processus de récolte sélectionnables (11a) et par le fait que, pour mettre en œuvre la stratégie de processus de récolte sélectionnée respective (11a), le dispositif de calcul (12) est agencé pour déterminer de manière autonome, sur la base du modèle de système (11b), au moins un paramètre machine, de préférence au moins un paramètre de système de battage, et pour le prescrire à l'organe de travail (1, 2, 6, 7).

3. Machine de récolte selon la revendication 1 ou 2, **caractérisée en ce que** le dispositif de calcul (12) est agencé pour cycliquement déterminer les paramètres machine et les prescrire à l'organe de travail (1, 2, 6, 7), et/ou **en ce que** le dispositif de calcul (12) est agencé pour cycliquement définir, respectivement modifier le modèle de système (11b).

4. Machine de récolte selon une des revendications précédentes, **caractérisée en ce qu'**un système de capteurs de processus de récolte (19) avec plusieurs capteurs de processus de récolte (19a, 19b) est prévu pour déterminer des paramètres de processus de récolte résultant du processus de récolte, et **en ce que** le dispositif de calcul tient compte des paramètres de processus de récolte générés par le système de capteurs de processus de récolte (19) lors de la détermination des paramètres machine.

5. Machine de récolte selon une des revendications précédentes, **caractérisée en ce que** le système de capteurs d'environnement (14) comporte plusieurs capteurs d'environnement (14a, 14b) pour générer des données de capteurs d'environnement, et **en ce que** le système de capteurs d'environnement (14) comporte un dispositif de préparation de données (20) qui génère des informations d'environnement à partir des données de capteurs d'environnement et les fournit au système d'assistance à la conduite (10).

6. Machine de récolte selon une des revendications précédentes, **caractérisée en ce que** le dispositif de préparation de données (20) génère, à partir des données de capteurs d'environnement, des informations d'environnement relatives à la culture du champ dans la zone de validité respective comme « densité de culture », « hauteur de culture », « composition de culture », « degré de maturité de culture », « informations de récolte versée », « proportion de plantes adventices », « proportion de produits verts », « terrain de culture », « géométrie des bords de culture » ou analogues, et/ou **en ce que** le dispositif de préparation de données (20) génère, à partir des données de capteurs d'environnement, des informations d'environnement relatives aux conditions géométriques du champ comportant la culture dans la zone de validité respective comme « présence d'obstacles », « topologie du sol » ou analogues, et/ou **en ce que** le dispositif de préparation de données génère, à partir des données de capteurs d'environnement, des informations d'environnement relatives à l'environnement du champ dans la zone de validité respective comme « présence d'embouteillage », « température ambiante », « humidité de l'air ambiant » ou analogues.

7. Machine de récolte selon une des revendications précédentes, **caractérisée en ce que** le dispositif de préparation de données (20) génère, à partir des données de capteurs d'environnement d'au moins deux capteurs d'environnement différents, une information d'environnement, de préférence **en ce que** le dispositif de préparation de données (20) détermine, à partir des données de capteurs d'environnement, les informations d'environnement relatives à la densité de culture et à la hauteur de culture et en déduit l'information d'environnement relative au volume de produit récolté, et/ou **en ce que** le dispositif de préparation de données (20) détermine, à partir des données de capteurs d'environnement, les informations d'environnement relatives à la densité de culture, à la hauteur de culture et à l'humidité de la culture et en déduit l'information d'environnement relative à la masse de produit récolté.

8. Machine de récolte selon une des revendications précédentes, **caractérisée en ce que** les zones de validité des informations d'environnement sont prises en compte par le dispositif de calcul (12) lors de la détermination des paramètres machine, de préférence **en ce que** les zones de validité des informations d'environnement sont enregistrées ou enregistrables respectivement dans la mémoire (11).

9. Machine de récolte selon une des revendications précédentes, **caractérisée en ce que** la zone de validité se trouve dans une zone avant, dans une zone arrière ou dans une zone latérale de la machine de récolte, de préférence **en ce que** le système de capteurs d'environnement (14) est agencé pour transmettre au système d'assistance à la conduite (10), la zone de validité spatiale (15-18) en plus des informations d'environnement.

10. Machine de récolte selon une des revendications précédentes, **caractérisée en ce que** le dispositif de calcul (12) génère, à partir des informations d'environnement, des zones de validité respectivement associées (15, 18) et des paramètres de marche telles que vitesse de marche et trace de roulement, une prédiction pour au moins une information d'environnement prédominante sur la machine de récolte à un moment de processus ultérieur, et de préférence **en ce que** le dispositif de calcul (12) détermine, en particulier de manière autonome, pour le moment de processus, au moins un paramètre machine sur la base des informations d'environnement prédites et, le cas échéant, d'autres informations et le prescrit à l'organe de travail respectif au moment de processus ou à un moment qui prend en compte un temps de réglage du paramètre machine et qui précède le moment de processus.

11. Machine de récolte selon une des revendications précédentes, **caractérisée en ce qu'**un organe de travail (1) est conformé en système de battage avec batteur (4) et contre-batteur (5) et est commandable par l'intermédiaire d'une prescription des paramètres machine « vitesse de rotation de batteur » et « largeur de contre-batteur ».

12. Machine de récolte selon la revendication 11, **caractérisée en ce que**, à la suite d'une augmentation des informations d'environnement « proportion de produits verts » et/ou « proportion de plantes adventices » et/ou « hauteur de culture » et/ou « densité de culture » le dispositif de calcul (12) augmente la largeur de contre-batteur et/ou augmente la vitesse de rotation de batteur pour réduire la charge du système de battage.

13. Machine de récolte selon la revendication 11 ou 12, **caractérisée en ce que**, à la suite d'une diminution de l'information d'environnement « densité de culture », le dispositif de calcul (12) réduit la largeur de contre-batteur et/ou augmente la vitesse de rotation de batteur pour réduire les pertes de battage.

14. Machine de récolte selon une des revendications 11 à 13, **caractérisée en ce que**, à la suite d'une diminution de l'humidité du produit et d'une augmentation de la proportion de grains cassés, le dispositif de calcul (12) réduit la vitesse de rotation du batteur.

15. Machine de récolte selon une des revendications 11 à 14, **caractérisée en ce que** la machine de récolte comporte un groupe propulseur et un régulateur de marche avant, et **en ce que** le régulateur de marche avant règle la vitesse de marche de la machine de récolte en fonction des informations d'environnement, de préférence **en ce que** le régulateur de marche avant règle un débit de produit récolté prédéfini en fonction du volume de produit récolté et/ou de la masse de produit récolté.
